Europäisches Patentamt

European Patent Office

Office européen des brevets

(19)

(11) **EP 0 651 235 B1**

(12) **EUROPEAN PATENT SPECIFICATION**

(45) Date of publication and mention
of the grant of the patent:
**09.04.1997 Bulletin 1997/15**

(51) Int Cl.⁶: **G01J 5/60**

(21) Application number: **93117392.6**

(22) Date of filing: **27.10.1993**

(54) **A method for evaluating the channel signals of a multichannel pyrometer**

Methode zum Auswerten der Kanalsignale eines Vielkanalpyrometers

Méthode d'évaluation de signaux des canaux d'un pyromètre à canaux multiples

(84) Designated Contracting States:
**AT BE CH DE DK ES FR GB GR IE IT LI LU MC NL PT SE**

(43) Date of publication of application:
**03.05.1995 Bulletin 1995/18**

(73) Proprietor: **EUROPEAN ATOMIC ENERGY COMMUNITY (EURATOM)**
**L-2920 Luxembourg (LU)**

(72) Inventor: **Ronchi, Claudio**
**D-76689 Neuthard (DE)**

(74) Representative: **Weinmiller, Jürgen**
**Postfach 24**
**82336 Feldafing (DE)**

(56) References cited:
**EP-A- 0 294 747**       **GB-A- 2 179 445**
**US-A- 5 132 922**

## Description

The invention refers to a method for evaluating the channel signals of a multichannel pyrometer, including the digital processing of output signals of all the channels analyzed according to the thermal radiation law:

$$L = E c_1 \, \lambda^{-5} [\exp(c_2/\lambda T)-1]^{-1}$$

where L is the spectral radiance, E the spectral emissivity of the surface whose temperature T should be measured, $c_1$ and $c_2$ are thermodynamic constants, and $\lambda$ is the channel wavelength, the spectral emissivity E being considered to depend on the wavelength according to the function $\ln E = a + b.f(\lambda)$, a and b being fitting parameters and $f(\lambda)$ a suitable function of the wavelength, and including an error compensation procedure in order to evaluate the true temperature from a variation analysis of the different channel signals.

Such a method is known from document EP-0 420 108 AI or further document US-A-5 132 922. Multichannel pyrometry is receiving an increasing attention from both metrology specialists and users from different research and industry circles. Since, in principle, multi-channel pyrometry makes it possible to determine simultaneously both temperature and effective spectral emissivity - no matter how the optical absorption of the medium is - the potential advantages of this technique are so important, that a revolution in the contactless temperature measurements may be envisaged in virtue of this method.

Yet, the technique, based on analogical-numerical fitting of the detected thermal radiation spectrum, presents various application problems. Some of them are due to the difficulty of predicting, by means of a general, fully a-priori functional model (the emissivity spline function), the actual trend of the spectral emissivity. Others arise from the much higher experimental accuracy which is needed, compared to conventional pyrometry (when, in the latter case, effective emissivity data are available).

The progress brought about by microcomputers of increasing performance, which can be used for complex on-line analysis, makes it possible to solve these problems, and enable multichannel pyrometry to evolve towards a self-consistent operation method by which external factors, like measurement conditions and/or calibration procedures, become less and less important.

Basically, for the evaluation of temperature from the experimentally detected thermal radiation spectrum, the emissivity is assumed to be sufficiently a smooth function of the wavelength $\lambda$ representable by a rapidly converging Taylor's series which, in a suitable range of $\lambda$, can be truncated as follows:

$$E\left(\lambda,T\right) = f(\lambda) = f(\lambda^0) + \frac{\partial f}{\partial \lambda}(\lambda - \lambda^0) + ... \simeq \sum_{k=1}^{M-1} a_{k-1}(T)\lambda^{k-1} \, , \qquad (1)$$

where $a_k$ are functions of the derivatives of $f(\lambda)$ at $\lambda = \lambda^0$ , an arbitrary wavelength in the chosen interval. This emissivity expression is substituted into Planck's radiation emission law to obtain the system of equations

$$\delta y_i = y_i - A_i \left[ \sum_{k=1}^{M-1} a_{k-1}\lambda_i^{k-1} \right] P(\lambda_i, T) = 0 \; ; \qquad i = 1,...,N \qquad (2)$$

where $P(\lambda,T)$ is the Planck black-body radiation function, $A_i$ are the calibration factors and $y_i$ the signals of the pyrometer. Eqs. (2) constitute a system of N transcendental equations in M unknowns (T and the coefficients $a_k$). For M=N the system may be solvable, but the existence of real roots is not guaranteed; furthermore, there is no exact algebraic algorithm for their evaluation. For N > M the system is overdetermined and an approximate solution can be sought, for instance by finding a minimum point of the least-squares (LSQ) functional

$$F(\vec{a}, T) = \sum_{j=1}^{N} W_j \delta y_j^2 ( = minimum) \qquad (3)$$

2

where $W_j$ are weighting factors to be defined on the basis of the experimental errors of the individual $y_j$. The numerical solution of eq. (3) can be obtained iteratively (powerful methods are available for minimizing a sum of squares, namely Newton-Raphson, Steepest Descent, Marquardt as well as combinations of them).

Two considerations have to be made in this regard. First, non-linear LSQ fitting is an algebraic problem which is far from being solved and for which there are no foolproof algorithms or search strategies; therefore, it is often difficult to judge the significance of the final residuals and their influence on the errors. In our case, this is particularly true if the emissivity is represented by polynomials of degree higher than one. Secondly, an optimization of the fitting is only meaningful with a suitable choice of the weight factors $W_j$. Generally, it appears reasonable to take $W_j = y_j^{-2}$, i.e. to minimize the fractional errors. But, in some cases, other criteria may be suggested by the prevailing experimental conditions (signal-to-noise ratio, offset, etc.).

Eq. (1) is fundamentally correct if $d\lambda = (\lambda - \lambda^0)$ is sufficiently small. However, it can be easily seen that the sensitivity of the results drastically increases if this interval shrinks. In other words, the narrower $d\lambda$, the higher has to be the precision of the signals in order to achieve the same precision in the results. For instance, by disposing of N=6 equations, the sum at the right hand side of eq. (1) may be extended up to the 4th-order in $\lambda$. At first sight, one could expect that by taking M as large as possible the real dependence of E on $\lambda$ is optimally approximated. Actually, in the presence of experimental errors an overfitting of the emissivity function produces a drastic deterioration of the results; in other words, the limits of the mathematical treatment of the experimental signals are established by their quality.

As the deduction of T and $a_k(T)$ is based on a non-linear fitting procedure, the evaluation of the errors is crucial. Essentially, the errors involved derive from four sources:

1. The noise of the signals and the accuracy of the offset correction.
2. The factors $A_i$, whose errors depend on the accuracy and precision of the calibration and on the linearity of the available photodiodes.
3. The error due to the finite wavelength window width. This can be calculated and, for window widths of less than 10% of $d\lambda$, is usually negligible compared to the above mentioned errors.
4. The temperature homogeneity of the radiating area and possible existing perturbances (e.g. chromatic absorption and refraction in the medium and in the pyrometer, etc.).
5. The adequacy of the approximation given by eq. (1) to describe the true emissivities at the selected wavelengths.
6. The quality of the LSQ fitting, i.e. the value of the final local residuals $\delta y_i^2$.

Generally, it cannot be said which of these errors is dominant as they depend on the experimental conditions; however, the errors due to 1) to 3) may be reduced to less than 0.5% for signal-to-noise (S/N) ratios of more than 100 when a standard calibration is carried out and the $\lambda$-window size is sufficiently small.

Errors due to points 5) and 6) are very crucial: These are primarily related to the standard deviation:

$$S_y = \sqrt{\sum^{N} \frac{\delta y_i^2}{N-M}} \qquad (4)$$

where M is the number of variables, i.e. temperature and the coefficients $a_k$ of the emissivity function (It should be remarked that N-M is the number of effectively independent determinations of $\delta y_i$). Though the residuals $\delta y_i^2$ decrease or, at worst, remain constant as the degree M of the spline polynomial increases, this is not generally the case for $S_y$. In fact, due to intrinsic properties of eqs. (2) or to limitations of the LSQ algorithm, $S_y$ may reach a minimum for a defined value of M.

Furthermore, independently of $S_y$, which expresses the resulting quality of the fitting procedure, a standard deviation $S_{exp}$, arising from error sources 1) to 4), can be assigned to the experimental data. It is obvious that any attempt to reduce $S_y$ far below $S_{exp}$ is meaningless. $S_{exp}$ should represent the lower bound for the expected error in the signals $y_i$. Thus, the final uncertainties in temperature and emissivity coefficients can be expressed as:

$$S_T = \sqrt{\sum_{i=1}^{N} \left[ \frac{\partial T}{\partial y_i} \right]^2 \max(S_y, S_{exp})} \qquad (5)$$

and

$$S_{a_k} = \sqrt{\sum_{i=1}^{N} \left[ \frac{\partial a_k}{\partial y_i} \right]^2 \max(S_y, S_{exp})} \qquad (6)$$

Now, if one increases the number M of fitting coefficients the quantities $\delta T/\delta y_i$ and $\delta a_k/\delta y_i$ increase dramatically. If the increase in these derivatives is not compensated by a proportional decrease in $S_y$ (i.e. by an improvement of the fitting precision) a greater uncertainty in temperature and emissivities has to be anticipated. In fact, when $S_y$ decreases below $S_{exp}$, the latter becomes the multiplication factor in eqs. (5) and (6) and $S_T$ and $S_{ak}$ increase if a better precision is attempted by using larger M's. Thus, the attainment of overfitting conditions provides an objective upper bound for the number of admissible parameters.

Finally, in order to optimize the results of the temperature evaluation, a local analysis of the data has to be carried out and the choice of the emissivity formula is dictated by two concurrent conditions: 1) The MSQR residual of the fitting, $S_y$, has to be reduced below the experimental standard deviation of the signals $S_{exp}$. 2) Once condition 1) is fulfilled, the uncertainty of the evaluated temperature should be minimum (MSQR = mean square root).

The evaluation of the temperature from the different pyrometer channel signals is by far the most time expensive step in the pyrometric measurement. If a micro-computer is used, in order to keep the signal processing time within viable limits, an essential simplification of the mathematical procedure has to be introduced. This can be obtained by linearizing the basic equations, i.e. by assuming a loglinear emissivity formula of type:

$$\ln(E) = a + b\lambda \qquad (7)$$

Furthermore, if Wien's law is assumed, and the logarithm of the signal is taken, the equations corresponding to eqs. (2) are:

$$\delta \tilde{y}_i = \delta \ln(y_i) = \ln\left( \frac{y_i \lambda_i^5}{A_i} \right) - \left( a + b\lambda_i - \frac{c_2}{\lambda_i T} \right) = 0 \ , \ i = 1, \ \ldots, \ N \qquad (8)$$

The solution of this overdetermined system of equations in a, b, T is readily transformed into a linear regression problem, by subtracting equations (8) two by two:

$$f_{i,k} = \ln\left( \frac{y_i \lambda_i^5}{A_i} \frac{A_k}{y_k \lambda_k^5} \right) \frac{1}{(\lambda_i - \lambda_k)} = b + \frac{c_2}{T} \frac{1}{\lambda_i \lambda_k} \qquad (9)$$

The N.(N-1) (of which only N independent) values $f_{i,k}$ plotted versus $1/(\lambda_i \lambda_k)$ are fitted by a regression line whose slope is the inverse of temperature and the ordinate intercept is b; these parameters are readily calculated from the measured couples $(y_i, \lambda_i)$. Once T and b are determined, the emissivity parameter a is consequently obtained.

This temperature computation method is obviously much faster than the general LSQ, though restrictions on the emissivity formula (the assumption of Wien's rule, instead of Planck's is not essential) are resulting.

However, there is still a large freedom in choosing the form of the emissivity spline function; in fact, in eq. (7), $\lambda$ can be replaced by any arbitrary function $f(\lambda)$ (e.g. displaying a suitable curvature and asymptotic behaviour, and also a minimum or a maximum, if this is needed).

Generally, by assuming a parametrized function $f(\lambda, m, n, \ldots)$ the parameters $m, n, \ldots$ are to be determined with an ad-hoc calibration procedure, by comparing the performance of function (7) for different values of the parameters (in the sense explained in the preceding section) with that of a validated simpler algorithm (e.g. a linear expression of $\ln(E)$.

The calibration of the pyrometer regards: a) the relative yields of the channels and b) the absolute intensities of the signals. For temperature evaluations only a) is relevant, whilst b) is needed if the value of the real spectral emissivities is required.

In practice, the absolute calibration is made with standard methods, by using a source of known temperature and spectral emissivities E and deducing the calibration factors, $A_j$, $j = 1,...6$ for each channel. Finally, the pyrometer signals $y_j$ satisfy the equation:

$$y_j = A_j \varepsilon_j P(\lambda_j, T), \qquad j = 1, ..., N \qquad (10)$$

where P is the Planck's black-body radiation function.

The stability of the calibration conditions is mainly affected by the possible variation of the detector photon/current conversion ratio and/or of the light partition factor in the channel i for its corresponding wavelength of index j (their product is called hereafter "channel yield", $Y_{j,j}$).

In practice, the instrument calibration can be adjusted with a rapid procedure if the channel yields are re-evaluated during the measurements. In order to obtain the highest accuracy the fractional light partition must be measured for each of the pyrometer operating wavelengths. This is made by sequentially measuring the fractional signals, $F_j$, $j = 1,...N$ (relative to an arbitrary reference channel) produced by monochromatic light with $\lambda = \lambda_j$, $j = 1,...N$. The signals are then re-normalized according to the equation:

$$y'_j = y_j Y_{jj} = y_j \frac{F_j(initial)}{F_j(new)}, \, j = 1, ..., N \qquad (11)$$

This re-calibration procedure is strictly correct, and makes it possible to compensate any kind of systematic error arising from chromatic instabilities of the pyrometer optics. However, since only the relative intensities can be adjusted, a bias of the absolute intensities $y'_j$, cannot be excluded, leading to a scaling of the measured emissivities; however, this does not affect at all both the calculated temperature and temperature error.

A device may be implemented to easily enable re-normalization to be performed.

The interferometric filters in the pyrometer are mounted on a revolving disk, so that each one can be sequentially positioned in front of all the detectors. With a full rotation of the disk the values of the relative yields, $Y_{i,k}$, of the channels i can be measured for all the operating wavelengths (index k). The disk is moved by a step motor, the check positions being precisely fixed. With this device this operation is performed within a few seconds, however, a more rapid rotation can be obtained, so that the check procedure does not significantly interfere with the routine measurements. The measured NxN intensities are directly stored in a matrix $Y_{i,k}$, whose diagonal is then used in eq. (11) for the on-line temperature evaluation. Finally, it is worth remarking that any sufficiently intense thermal source, even of unspecified temperature, can be used for re-calibration, the only requirement being that the light intensity does not vary during the check time.

The information provided by a multichannel pyrometer is more comprehensive than that of a linear pyrometer, yet this information is only in part exploited by the above mentioned procedure for temperature evaluation. With this background in mind, the invention proposes a method for reducing the temperature error in a multichannel pyrometer. This is achieved by the method as defined in the appended claim. The invention will now be described in detail with reference to the drawings.

Figure 1 shows the graphs of f over $(1/\lambda)$ from equations (9) for different values of b.

Figure 2 shows the same graph in case of systematic errors.

Figures 3 and 4 show the optimization of a mediocre measurement from a grey body (Figure 3) and a body with variable spectral emissivity respectively (Figure 4) according to the invention. In these graphs "+" signs signify temperature uncertainty values $S_T$ plotted over temperature in K (equation 5), and circles (Figure 3) or squares (Figure 4) signify values of b from equation (12) hereafter [1/(10 μm)] plotted again over temperature in K.

It is in fact justified to assume that the signals fluctuating within the (uncorrelated) experimental errors are more in accordance with reality when they better fulfil the correlation predicted by a well validated emissivity law. For instance, if a source of $\lambda$-independent emissivity is measured ("grey body"), one expects that a set of six signals can be found within the respective uncertainty bands, from which six constant emissivities are calculated with an effectively zero residual in the LSQ analysis, and hence the corresponding calculated temperature will be the correct one.

The search of the correct values within the probable error band can be carried out using a sufficiently fast computer, with the "wobbling" method according to the invention. Through a random number generator each measured signal $y_k$ is perturbed by adding an increment $\delta y_k$ comprised between zero and the estimated error; the new temperature is then evaluated with the respective uncertainty. If the experimental error is unknown, the wobbling amplitude can be taken equal to the standard deviation from the calculated regression line. It is important to keep the wobbling amplitudes within these realistic bounds, otherwise extraneous solutions could be prospected which render the choice of the correct solution ambiguous. Through a sequence of logical IF-gates, a computer program evaluates the temperatures from the varied signals and the degree of confidence of the new results, and, at the end of the wobbling cycles, a corrected value of T is proposed.

The application of the wobbling procedure to compensate possible errors requires some qualitative information about the nature of these errors, as explained hereafter.

For the sake of simplicity let us assume again a log-linear emissivity formula

$$\ln E = a + b\lambda$$

so that the emissivity is expressed as the product of a scaling factor exp(a) times a variable exp(b$\lambda$). As shown before, the calculation of T can be performed independently of the scaling factor a. Attention is therefore concentrated on the relation between b and T.

If Wien's formula is applied to a set of perfectly correct measurements, $y_k$, k = 1,...N, the system of equations:

$$f(\lambda_k) = \ln(\lambda^5_k y_k) - b\lambda_k = \text{const.} -1/\lambda_k T, \ k = 1,...N \tag{12}$$

is satisfied for a distinct b = $b_0$, and the points f($\lambda_k$) plotted against 1/$\lambda_k$ are aligned on a straight line whose slope is 1/T.

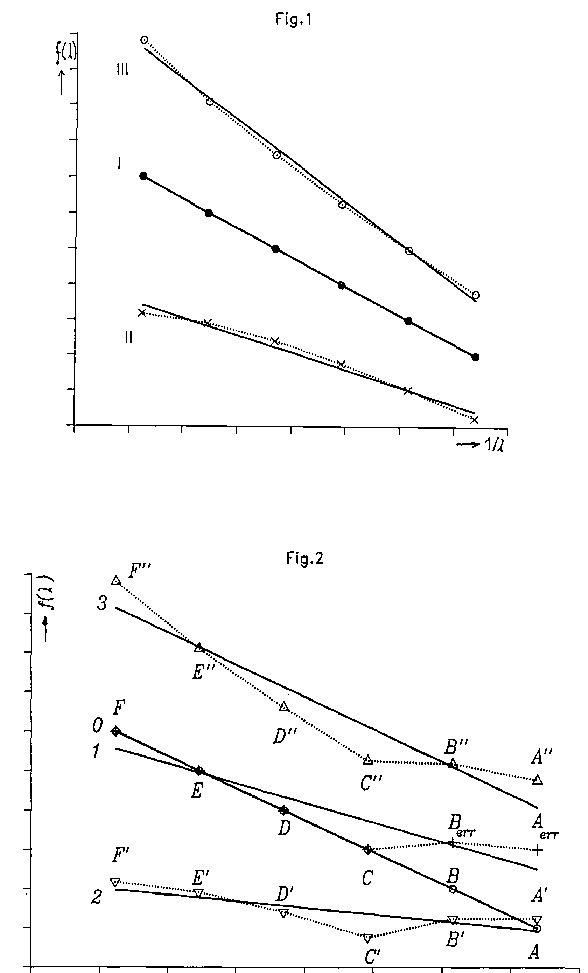

Now, let us consider the graph of Fig. 1: if the parameter b corresponding to the "right" solution is perturbed, the resulting f($\lambda_k$) will be generally not aligned, and a LSQ procedure has to be applied to obtain a linear fitting. The response of T, i.e. the inverse of the slope of the fitting line, can be generally predicted: for values of b > $b_0$ T becomes larger than the correct value (line II), and vice versa (line III); furthermore, for values of b > $b_0$ the perturbed points lay, respectively, on lines of opposite curvature (dotted curves in Figure 1).

Let us now assume that a systematic error occurs in the detection of one or more signals. For instance, let be A, B, C, D, E, F (Figure 2) a set of hypothetical, correct measurements, and say, A and B be respectively displaced to $A_{err}$ and $B_{err}$.

If $b_0$ is kept constant, after the displacement of A and B the LSQ analysis of the perturbed set of points $A_{err}$, $B_{err}$, C, D, E, F produces an increase in the predicted temperature (from line 0 to line 1 in Figure 2). Yet, in the two-parameter LSQ analysis b is considered as a variable, and hence a larger value b = $b_{err}$ is found for which the points are displaced to A', B', C', D', E', F' with a better linear fitting, but with an even worse excess temperature (line 2). The ordinate intercept of the regression line at 1/T = 0 is a. Therefore, the analysis interprets the perturbed signals as emitted by a source with a too low spectral emissivity and too strong $\lambda$ dependence. Error amplification mechanisms of this type are quite general in ratio pyrometry.

On the contrary, in order to obtain the right temperature from a linear fitting of the perturbed data, b should decrease with respect to $b_{err}$, i.e. be varied, in the sense opposite to the two-parameter LSQ prediction, from $A_{err}$, $B_{err}$, C, E, F to A'', B'', C'', D'', E'', F'' (line 3); however, since the linear regression coefficient of the latter set is worse than that of the former, a wobbling test merely based on the best linear fitting has no chance of individuating the correct temperature, the predicted T being, in this case, definitively biased toward excess values.

A substantially better approach is accessible if the sign of the bias in b can be predicted (as in the discussed example).

In this case, starting from the set $A_{err}$, $B_{err}$, C, D, E, F we shall impose as gate conditions for the acceptance of a varied set that:

- the linear regression coefficient be better than that of $A_{err}$, $B_{err}$, C, D, E, F, and
- the parameter b be a minimum.

With this selection criterion the statistical trials of the wobbling procedure will provide "best values" of b and T converging toward the parameters of the "correct" line 0 (A, B, C, D, E, F).

Generally, by applying to the wobbling cycle the two criteria of minimum fitting error, and minimum or maximum of b (see table I), one obtains two temperatures which are compensated for systematic signal deviations respectively decreasing and increasing with $\lambda$.

| Error Position in the $\lambda$ Interval | Error Sign | Wobbling Conditions | | |
|---|---|---|---|---|
| | | Parameter $b$ | LSQ Fitting Residual | Wobbling Amplitude |
| Lower | Excess | Minimum | Conditioned Minimum | $\delta y_{exp}$ |
| Higher | Excess | Maximum | Conditioned Minimum | $\delta y_{exp}$ |
| Lower | Defect | Maximum | Conditioned Minimum | $\delta y_{exp}$ |
| Higher | Defect | Minimum | Conditioned Minimum | $\delta y_{exp}$ |
| Unknown | Unknown | - | Minimum | $< \sum_{j=1}^{6} \delta y_j^2$ |

## Table I - Wobbling criteria for compensating systematic errors

The analysis is obviously facilitated if certain bounds for the variation of b (or a) are available, or, even more, if the measured object is grey (b = 0). In fact, any kind of qualitative information concerning both the measurement conditions and the radiative properties of the object can be exploited in the temperature evaluation program.

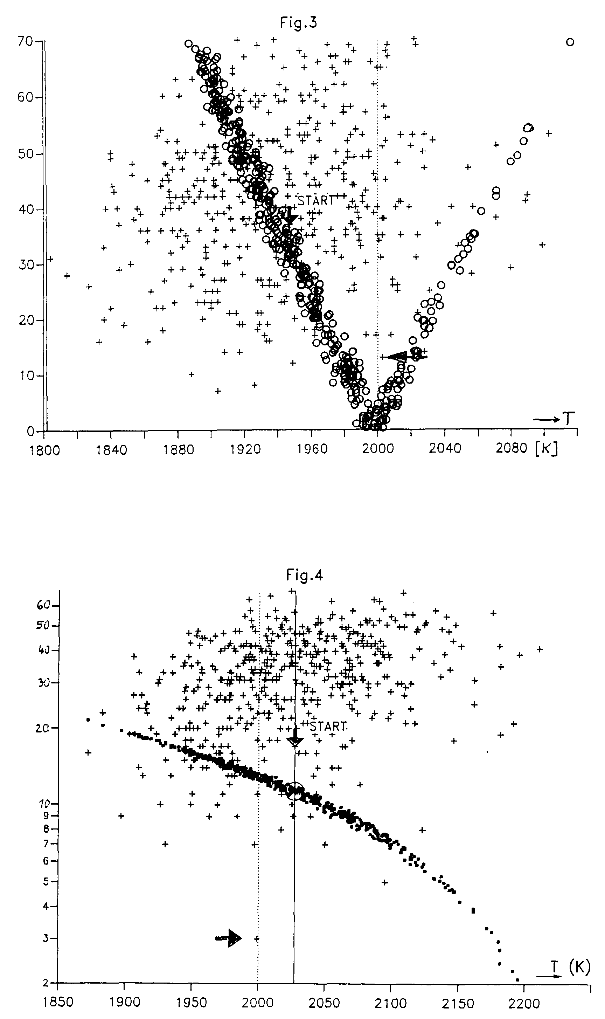

Figures 3 and 4 show two applications of wobbling optimization.

In the first case (Figure 3), the temperature of a "grey" body (with emissivity independent of $\lambda$) is calculated from signals of low accuracy. The real temperature is 2000 K, whilst one single measurement is giving 1947 K. After application of wobbling with 2% amplitude, a number of possible corrections are to be investigated. The set of parameters $(T_j, S_{Tj}, b_j)$ is plotted in Figure 3. It can be seen that from the random variation of the signals, the parameter |b| has a sufficiently well defined trend as a function of T, whereas the error $S_{Tj}$ does not show a clear trend. Since it is known a-priori that the emissivity is constant, the probable value of T should correspond to a conditioned minimum of both b and $S_T$: this is found at one point (indicated in the figure by the horizontal arrow) at 2002 K, i.e. only 2 kelvin above the real value.

In the second case (Figure 4), the source, at 2000 K, has a variable emissivity ( $b \neq 0$). The discrepancy between measured and real temperature is here 27 K.

Again, wobbling produces a good correlation between b and T. However, in this case no information is available on the real value of this parameter, so that the correction should be sought in terms of only $S_T$. After 500 cycles, the minimum of $S_T$ is found at 1998 K, which represents a remarkable improvement.

At first sight, this correction procedure looks rather problematic; in practice, a limited number of possibilities is pre-established in the analytical program, and the criterion to be chosen is normally easily inferred from the context of the actual measurements. In fact, it is worth remarking that whilst the parameter a is to be treated as a completely free variable, since it accounts for achromatic perturbations which can possibly take place during the measurement (e.g. window absorption, refraction in the medium, etc.), b = b(T) is a material property, and therefore not subject to fluctuations as long as the radiating source does not change its state. Instabilities in b(T) inherent in the performance of the pyrometer optics may be compensated with the on-line calibration procedure, as explained above. Other chromatic perturbations of the measured radiation spectrum result in a larger temperature uncertainty. In such cases the analysis reveals effective spectral emissivities $E_{eff} \neq E$. The temperature may still be correct, on condition that the aberration factors are well represented by the same formula as the emissivities. This is, however, generally not the case, and a compensation is only recommendable if the perturbations are small.

The reference instrument discussed here is a six-wavelength pyrometer working in the visible to infrared wavelength range. The optics consists of an standard achromatic objective focusing the measured object onto a fiber bundle which is statistically splitted into six sub-bundles, corresponding to the different channels. The light transmitted by each channel is filtered through an interferometric filter with a window centered on the respective operating wavelength.

## Claims

1. A method for evaluating the channel signals of a multichannel pyrometer, including the digital processing of the output signals of all the channels analyzed according to the thermal radiation law $L = Ec_1.\lambda^{-5}.[\exp(c_2/\lambda T)-1]^{-1}$, where L is the spectral radiance, E the spectral emissivity of the surface whose temperature T should be measured, $c_1$ and $c_2$ are thermodynamic constants, and $\lambda$ is the channel wavelength, the spectral emissivity E being considered to depend on the wavelength according to the function $\ln E = a+b.f(\lambda)$, a and b being fitting parameters and $f(\lambda)$ a suitable function of the wavelength, and including an error compensation procedure in order to evaluate the true temperature from the different values obtained in the different channel, characterized in that during the error compensation procedure each radiance signal L is perturbed by subsequently adding random increments $\delta L$ comprised between zero and the estimated experimental error, that the new temperature values and emissivities values are then evaluated with the respective uncertainties and that finally the true temperature is selected therefrom in accordance with the degree of confidence of the new values.

## Patentansprüche

1. Methode für die Auswertung der Kanalsignale eines Mehrkanalpyrometers einschließlich der digitalen Verarbeitung der Ausgangssignale aller analysierten Kanäle nach dem Wärmestrahlungsgesetz

$$L = Ec_1 \; \lambda^{-5}[\exp(c_2/\lambda T)-1]^{-1},$$

wobei L die spektrale Strahlungsdichte, E die spektrale Emissivität der Oberfläche, deren Temperatur T gemessen werden soll, $c_1$ und $c_2$ thermodynamische Konstanten und $\lambda$ die Wellenlänge des Kanals sind, wobei die spektrale Emissivität E als von der Wellenlänge gemäß der Funktion $\ln E = a + b.f(\lambda)$ abhängig betrachtet wird, wobei a und b Fitting-Parameter und $f(\lambda)$ eine geeignete Funktion der Wellenlänge sind und wobei die Analyse eine Fehlerkompensationsprozedur einschließt, um die wahre Temperatur aus der Analyse der Variation der verschiedenen Kanalsignale abzuleiten, dadurch gekennzeichnet, daß während der Fehlerkompensationsprozedur jedes Strahlungsdichtesignal L gestört wird, indem nacheinander Zufallsinkremente $\delta L$ zwischen 0 und dem geschätzten experimentellen Fehler hinzugefügt werden, daß die neuen Temperaturwerte und die Emissivitätswerte dann mit den entsprechenden Ungewißheiten ermittelt werden, und daß schließlich die wahre Temperatur daraus im Einklang mit dem Vertrauensgrad der neuen Werte ausgewählt wird.

## Revendications

1. Une méthode pour évaluer les signaux d'un pyromètre à différentes couleurs, qui inclus la conversion digitale des signaux de output de tous les canaux analysés selon la lois d'émission thermique $L = Ec^1 \lambda^{-5}[\exp(c^2/\lambda T)-1]^{-1}$, où L est la radiance thermique spectrale, E l'émissivité spectrale de la surface dont la température doit être mésurée, $c^1$ et $c^2$ sont des constantes thermodynamiques et $\lambda$ est la longueur d'onde du canal, l'émissivité spectrale étant considérée comme dépendante de la longueur d'onde selon la fonction $\ln E = a+bf(\lambda)$, a et b étant des paramètres d'ajustement et $f(\lambda)$ une fonction convenable de la longueur d'onde, avec l'inclusion d'une procédure de compensation de l'erreur de température en vue d'évaluer la température réelle partir des différent signaux des canaux, caractérisée par le fait que, pendant la procédure de compensation d'erreur, chaque signal de radiance L est perturbé par une séquence d'incréments aléatoires compris entre zéro et l'erreur expérimentale estimée, que la nouvelle température et les émissivités spectrales sont recalculées avec leurs incertitudes et que enfin la vraie température est sélectionnée sur la base du degré de fiabilité des nouvelle valeurs.

Fig.1

Fig.2

Fig.3

Fig.4